# EUROPÄISCHE PATENTANMELDUNG

(11) **EP 0 650 880 A1**
(43) Veröffentlichungstag der Anmeldung: **03.05.1995**
(21) Anmeldenummer: 94111344.1
(22) Anmeldetag: 21.07.1994
(51) Int. Cl.: B62B 3/00

(54) **Wagen zur Aufnahme eines Behälters**

(30) Priorität: 29.10.1993 DE 9316827 U
(71) Anmelder: Gebr. OTTO KG, D-57223 Kreuztal (DE)
(72) Erfinder: Bange, Wolfgang, D-57250 Netphen (DE)
(74) Vertreter: COHAUSZ HASE DAWIDOWICZ & PARTNER

(57) **Zusammenfassung**

Die Erfindung betrifft einen Wagen zur Aufnahme eines Behälters, insbesondere eines Korbes auf seiner oberen Ladefläche, die eine Stützfläche für den Behälter bildet, wobei die Stützfläche, insbesondere die Ladefläche 2 gegenüber der Standfläche 3 des Wagens 1 geneigt ist.

## Beschreibung

Die Erfindung betrifft einen Wagen zur Aufnahme eines Behälters, insbesondere eines Korbes auf seiner oberen Ladefläche.

Rollbare Wagen, auf denen Behälter, insbesondere Körbe aufstellbar sind, sind allgemein bekannt. Sie werden überall dort eingesetzt, wo Kleinteile in Behältern gesammelt bzw. gelagert und die Behälter möglichst leicht und ohne großen Kraftaufwand von einem Ort zu einem anderen Ort transportiert werden müssen. Dies ist vor allen in Lagerhallen, Supermärkten und in produzierenden Gewerbebetrieben der Fall. Die Behälter werden dabei mit den verschiedensten Teilen beladen.

Bei den verwendeten Behältern handelt es sich meist um standardisierte Körbe aus Kunststoff, die sich übereinander stapeln lassen. Die Körbe bestehen dabei aus einer Bodenplatte und vier senkrechten im Rechteck angeordneten Seitenwänden.

Beim Beladen von länglichen Teilen ist es oft vorteilhaft, diese hochkant in dem Behälter anzuordnen, um möglichst viele Teile im Behälter lagern zu können.

Herkömmliche Wagen, beladen mit den oben beschriebenen Behältern, weisen dabei den Nachteil auf, daß beim Beladen die hochkant in die Behälter eingelegten Teile zum Umfallen neigen, da sie sich in einer labilen Gleichgewichtslage befinden.

Der Erfindung liegt daher die Aufgabe zugrunde, einen Wagen der gattungsmäßigen Art so zu gestalten, daß das beschriebene Problem beim Beladen der Körbe entfällt.

Erfindungsgemäß wird die gestellte Aufgabe dadurch gelöst, daß die Ladefläche gegenüber der Standfläche des Wagens geneigt ist.

Das bedeutet, daß auch die Wände des auf den Wagen gestellten Behälters gegenüber dem Lot, entsprechend dem Neigungswinkel α zwischen der Standfläche und der Ladefläche des Wagens geneigt sind. Die labile Gleichgewichtslage der in die Behälter eingestellten und an die Seitenwände gelehnten Teile, wird so in eine stabile Lage überführt. Ein unerwünschtes Umfallen der zu beladenden Teile entfällt.

Der Wagen hat vorteilhafterweise vier Rollen, die an Gabeln gelagert sind, wobei die Gabeln an der Unterseite der Beladefläche nahe jeder Ecke befestigt sind und mindestens zwei der Gabeln an der Unterseite der Beladefläche drehbar angelenkt sind.

Die Neigung zwischen Stand- und Ladefläche des Wagens wird erfindungsgemäß dadurch erzielt, daß der Abstand zwischen Standfläche und Unterseite der Beladefläche auf der Schmal- oder Längsseite des Wagens größer ist als auf der gegenüberliegenden Schmal- oder Längsseite.

Eine besonders favorisierte Ausführung der Erfindung sieht vor, daß die Rollen einer Seite einen größeren Durchmesser aufweisen, als die Rollen auf der gegenüberliegenden Seite.

Diese Form der Ausführung gestattet es den Neigungswinkel α durch individuelle Anpassung der Rollendurchmesser an die jeweilige Aufgabenstellung anzupassen. Mit einem Sortiment von Rollen verschiedener Durchmesser kann der jeweilige Neigungswinkel α eingestellt werden. Auch kann der Wagen durch den Einsatz von vier Rollen gleichen Durchmessers zu einem herkömmlichen Wagen umfunktioniert werden.

Eine Neigung zwischen Standfläche und Ladefläche des Wagens wird vorteilhafterweise dadurch erreicht, in dem der Abstand zwischen der Rollenachse und dem oberen Gabelende auf einer Wagenseite größer ist, als auf der gegenüberliegenden Seite.

Dabei ist es besonders vorteilhaft, wenn die Gabeln zur Aufnahme der Rollenachse mehrere Bohrungen aufweisen, die in der Längsausdehnung der Gabel, insbesondere in einem Raster, angeordnet sind.

Hiermit läßt sich eine relativ leichte stufenweise Verstellung des Neigungswinkels α erzielen. Auch hat diese Ausführung den Vorteil, daß nur Rollen und Gabeln gleicher Abmessungen und Gestalt zum Einsatz kommen, was sich bei einer großen Stückzahlproduktion besonders kostengünstig auswirkt.

Ein Neigungswinkel läßt sich auch dadurch erzielen, wenn die Beladefläche ein keilförmiges Teil ist oder auf der oberen Ladefläche des Wagens auf einer Wagenseite Abstandsteile befestigt oder auflegt werden, wodurch die Standfläche des Behälters gegenüber der Standfläche des Wagens geneigt wird.

Vorteilhafterweise soll der Neigungswinkel α = 1 bis 20 Grad, insbesondere 2-10 Grad betragen. Er soll aber nicht größer als 20 Grad betragen, damit noch genügend Behälter übereinander auf dem Wagen gestapelt werden können, ohne daß der entstandene Behälterstapel kippt.

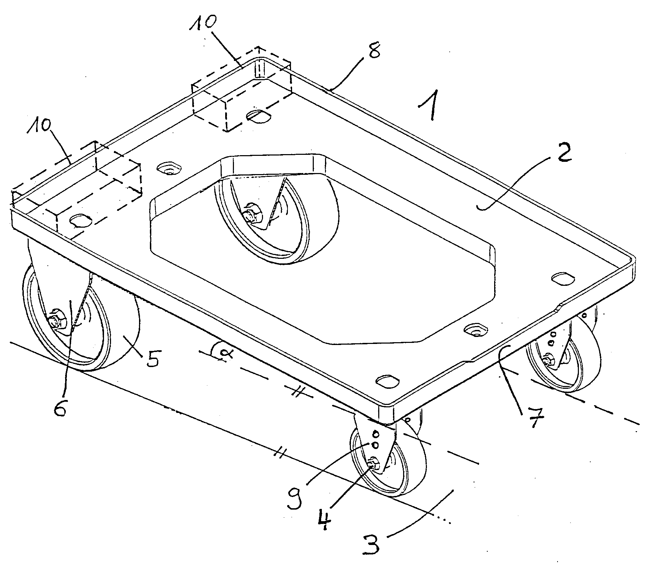

Ein bevorzugtes Ausführungsbeispiel der Erfindung wird nachfolgend anhand der Zeichnung erläutert.

Die Zeichnung stellt einen Wagen 1 dar, der eine Ladefläche 2 aufweist, wobei die Ladefläche 2 rechteckförmig ist und eine Schmalseite 7 und eine Längsseite 8 besitzt. Die Ladefläche 2 ist dabei um den Neigungswinkel α gegenüber der Standfläche 3 des Wagens 1 geneigt.

An der Unterseite der Ladefläche 2 sind in den vier Ecken Gabeln 6 zur Aufnahme von Rollen 5 befestigt, wobei die Gabeln drehbar an der Unterseite der Ladefläche 2 angelenkt sind.

Die Rollen 5 einer Schmalseite 7 weisen zur Bildung des Neigungswinkels α einen größeren Durchmesser auf, als die Rollen 5 der anderen Schmalseite.

In einer nicht dargestellten Ausführung können die vier Rollen den gleichen Durchmesser aufweisen, wobei jedoch dann der Abstand der Rollenachse 4 und dem oberen Gabelende auf einer Wagenseite größer ist als auf der gegenüberliegenden Seite, um den Neigungswinkel α zu erzeugen.

In einer ebenfalls nicht dargestellten Ausführung, können die Rollen 5 und Gabeln 6 jeweils gleiche Abmessungen und Formen aufweisen. In diesem Fall ist die Ladeflächenplatte 2 keilförmig ausgebildet sein, um den Neigungswinkel α zu erzeugen.

Eine weitere Alternative ist, daß die Gabeln 6 über Bohrungen 9 zur Aufnahme der Rollenachsen 4 verfügen, und die Bohrungen 9 insbesondere in einem Raster angeordnet sind. Hierdurch läßt sich durch Verstellen der Rollenachsen 4 im Bohrungsraster der Neigungswinkel α bestimmen.

Auch können zur Erzeugung des Neigungswinkels α ein oder mehrere Abstandsteile 10 auf einer Schmalseite 7 oder Längsseite 8 auf der Ladefläche 2 befestigt sein.

## Patentansprüche

1. Wagen zur Aufnahme eines Behälters, insbesondere eines Korbes auf seiner oberen Ladefläche, die eine Stützfläche für den Behälter bildet, **dadurch gekennzeichnet**, daß die Stützfläche, insbesondere die Ladefläche (2) gegenüber der Standfläche (3) des Wagens (1) geneigt ist.

2. Wagen nach Anspruchen 1, **dadurch gekennzeichnet**, daß der Abstand zwischen Standfläche (3) und Unterseite der Ladefläche (2) auf der Schmal- (7) oder Längsseite (8) des Wagens (1) größer ist als auf der gegenüberliegenden Schmal- (7) oder Längsseite (8).

3. Wagen nach einem der vorherigen Ansprüche, **dadurch gekennzeichnet**, daß die Rollen (5) einer Seite einen größeren Durchmesser aufweisen, als die Rollen (5) auf der gegenüberliegenden Seite.

4. Wagen nach einem der vorherigen Ansprüche, **dadurch gekennzeichnet**, daß die Rollen (5) des Wagens an Gabeln (6) gelagert sind und die Gabeln (6) an der Unterseite der Beladefläche (2) nahe jeder Ecke befestigt sind, wobei mindestens zwei der Gabeln (6) an der Unterseite der Beladefläche (2) drehbar angelenkt sind und der Abstand zwischen der Rollenachse (4) und dem oberen Gabelende auf einer Wagenseite größer ist, als auf der gegenüberliegenden Seite.

5. Wagen nach Anspruch 4, **dadurch gekennzeichnet**, daß zum Einstellen verschiedener Höhen, die Gabeln (6) zur Aufnahme der Rollenachse (4) mehrere Bohrungen (9) aufweisen, die in der Längsausdehnung der Gabel (6) , insbesondere in einem Raster, angeordnet sind.

6. Wagen nach einem der vorherigen Ansprüche, **dadurch gekennzeichnet**, daß die Ladefläche (2) ein keilförmiges Teil ist, an dessen Unterseite vier Rollen (5) angelenkt sind.

7. Wagen nach einem der vorherigen Ansprüche, **dadurch gekennzeichnet**, daß auf der oberen Ladefläche (2) des Wagens (1) Abstandsteile (10) befestigt oder auflegbar sind, die die Stützfläche zumindest einer Wagenseite bilden.

8. Wagen nach einem der vorherigen Ansprüche, **dadurch gekennzeichnet**, daß der Neigungswinkel α = 1 bis 20 Grad, insbesondere 2-10 Grad beträgt.
